# EUROPEAN PATENT SPECIFICATION

(11) **EP 2 227 606 B1**
(45) Date of publication and mention of the grant of the patent: **18.04.2012**
(21) Application number: 07866803.5
(22) Date of filing: 13.12.2007
(51) Int. Cl.: E04B 1/98, E04H 9/02, F16F 7/10

(54) **TUNED MASS DAMPER**
DÄMPFER MIT ABSTIMMBARER MASSE
AMORTISSEUR DE MASSE ACCORDÉ

(43) Date of publication of application: 15.09.2010
(73) Proprietor: Alga S.P.A., 20121 Milano (IT)
(72) Inventor: MARIONI, Agostino, I-20121 Milano (IT)
(74) Representative: Concone, Emanuele
(86) International application number: PCT/IT2007/000871
(87) International publication number: WO 2009/075003

(56) References cited:
- EP-A- 1 715 112
- DE-A1-102006 019 913
- US-A1- 2002 166 296
- US-A1- 2006 000 159
- US-A1- 2006 174 555

## Description

The present invention relates to a tuned mass damper and particularly to a tuned mass damper suitable for the application to civil and building structures (civil structures and buildings) like skyscrapers, towers and bridges (see, for example, DE 10 2006 019913 A1, corresponding to the preamble of claim 1).

Tuned mass dampers, also known under the acronym TMD, are devices for damping vibrations used for stabilizing the motion of a structure subject to an external force, thus preventing the structure from being damaged or even yielding.

Such devices are essentially mechanical systems of the mass-spring-damper type provided with one or more degrees of freedom and designed to be in resonance with the structure in which they are installed. Whenever the structure vibrates subject to any force like, for example, wind or an earthquake, the dampers oppose the inertia of the mass to the vibration motion, thus generating, as an effect of the resonance, equal and opposed forces capable of nullifying the motions of the structure.

In the field of building and construction, and particularly in the construction of very tall structures like skyscrapers, towers and bridges that are very sensitive to wind and seismic events, tuned mass dampers are made as pendulum structures wherein the mass is a cement or steel block supported by ropes or arms restrained to the structure. The mass moves according to the law of motion of a pendulum, storing and releasing potential energy similarly to a mass restrained by a spring of a mass-spring-damper system, while the damping action is accomplished by one or more damping means, e.g. of a hydraulic type, arranged in the one or more preset directions of motion.

Tuned mass dampers of the pendulum type have remarkable installation problems, due to the size of both the suspended masses and the related supporting means. For instance, in the case of a skyscraper the structure of a tuned mass damper may occupy even some floors of the building in height.

Moreover, after the installation, a tuned mass damper always requires a "tuning" step with respect to the real dynamic behavior of the structure. In fact, a damper is designed on the basis of a theoretical model of the structure to which it will be applied, therefore adjustments of the fundamental period are always required once the structure has been completed. Generally, a tuning step is rather complicated and expensive since the adjustment of the length of the ropes or arms supporting the mass requires the use of equipment like winches or tension rods, which may be removably or even permanently installed.

It is therefore an object of the present invention to provide a tuned mass damper capable of overcoming said disadvantages. Said object is achieved by means of a tuned mass damper whose main features are disclosed in the first claim, while other features are disclosed in the remaining claims.

The tuned mass damper according to the present invention comprises at least one mass restrained to supporting means suitable to allow a pendulum motion thereof when the structure is subject to an external force. The supporting means comprise at least one bearing provided with a concave cylindrical sliding surface.

The main advantage of the tuned mass damper according to the present invention is that it has a remarkably smaller size with respect to known dampers, thus allowing an easier installation into the structure for which it is intended. In fact, choosing mass supporting means in the form of at least one concave cylindrical bearing allows to reduce the system size, which substantially coincides with the mass size only. Consequently, it is possible to reduce both the manufacturing and installation costs of the damper.

Moreover, by coating or making the sliding surfaces of the bearings with controlled friction materials, it is possible to accomplish damping means without resorting to traditional external devices, e.g. of a hydraulic type or the like, installed on the structure and restrained to the mass, thus further reducing the manufacturing costs.

Another advantage offered by the invention is that the tuning step of the damper is strongly simplified. In fact, the sliding surfaces of the bearings are provided with variable curvature radiuses, thus allowing to adjust the fundamental period by simply varying the contact point between the supporting means and the mass transversally to its direction of motion.

Still another advantage offered by the invention is that it is possible to make a damper provided with more degrees of freedom by arranging the bearings on a multilayer structure and orienting the sliding surfaces of the bearings of each layer such as to define more directions of motion.

Moreover, the behavior of the damper in the various directions of motion may be differentiated by choosing different curvatures of the sliding surfaces and/or using different controlled friction materials.

Further advantages and features of the tuned mass damper according to the present invention will become clear to those skilled in the art from the following detailed and non-limiting description of some embodiments thereof with reference to the attached drawings, wherein:
- figure 1 shows a perspective view of a first embodiment of a tuned mass damper according to the present invention;
- figure 2 shows a detail II of figure 1;
- figure 3 shows a perspective view of a second embodiment of a tuned mass damper according to the present invention, provided with means for tuning the fundamental period;
- figure 4 shows a detail IV of figure 3;
- figure 5 shows a cross-section V-V of figure 3;
- figures 6 and 7 show a detail VI and a detail VII of figure 5, respectively;
- figure 8 shows a perspective view of a third embodiment of a tuned mass damper according to the present invention, provided with two degrees of freedom;
- figure 9 shows a detail IX of figure 8;
- figure 10 shows a cross-section X-X of figure 8; and
- figure 11 shows a detail XI of figure 10.

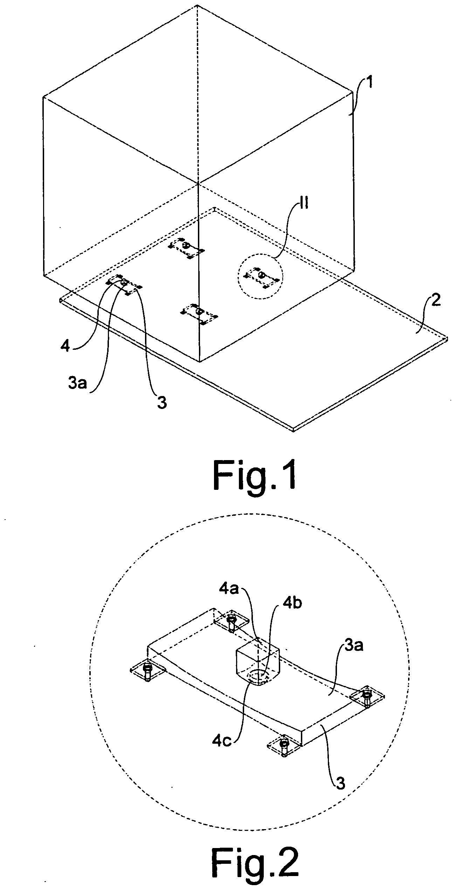

Referring to figures 1 and 2, the tuned mass damper according to the present invention comprises in a known way a mass 1 restrained to a structure 2 through supporting means 3 suitable to allow a pendulum motion of mass 1 when structure 2 is subject to an external force as, for instance, wind or an earthquake.

According to the inventive concept which is the basis of the present invention, the supporting means 3 comprise at least one bearing provided with a concave cylindrical sliding surface 3a. Mass 1, made to move upon the action of a force acting on the structure, moves along the sliding surface 3a of bearing 3, increasing and decreasing its potential energy according to the law of motion of a pendulum. The fundamental period of the oscillation of mass 1, defined by the radius of the sliding surface 3a, is substantially equal to the fundamental period of structure 2, thus the damper and structure 2 are resonant.

In the design of the damper according to the present invention, mass 1 is so dimensioned as to be equal to 2-4% of the total mass of the structure to which it is applied.

Moreover, the size of mass 1 is remarkably larger with respect to the order of magnitude of the movements that mass 1 makes in order to react against the movements of structure 2. Therefore, both for encumbrance and stability reasons the supporting means comprise a plurality of bearings, whose concave cylindrical sliding surfaces 3a have the same curvature and are arranged parallel to each other, thus defining one single direction of motion for mass 1. Correspondingly, mass 1 is provided with a plurality of feet 4 arranged at positions corresponding to the positions of bearings 3.

In the embodiment shown in figure 1, for example, the damper comprises four bearings 3 respectively provided with sliding surfaces 3a and mass 1 is provided with four feet 4 arranged at positions corresponding to the positions of bearings 3.

As shown in the detail of figure 2, each foot 4 consists of an upper portion 4a restrained to mass 1 and of a lower portion 4b that has a convex cylindrical surface 4c suitable to contact the sliding surface 3a of the respective bearing 3.

The upper portion 4a and the lower portion 4b of each foot 4 are movable with respect to each other and coupled by means of a cylindrical or spherical cap joint allowing a relative rotation thereof. In this way, mass 1 moves along the sliding surfaces 3a of bearings 3 without rotating with respect to the plane of structure 2.

During the motion of mass 1, a certain amount of kinetic energy is dissipated through friction in the contact between the concave cylindrical sliding surfaces 3a of bearings 3 and the convex cylindrical surfaces 4c of feet 4, thus achieving a damping effect. Therefore, without resorting to external damping devices as in known applications, the damper according to the present invention may be provided with damping means in the form of coatings of controlled friction materials of the concave cylindrical sliding surfaces 3a of bearings 3 and the convex cylindrical surfaces 4c of feet 4.

Alternatively, bearings 3 and the lower portions 4b of feet 4 may be entirely made of controlled friction materials.

Preferably, the controlled friction materials are combined with each other so as to minimize the wear. Suitable controlled friction materials are, for example, stainless steel and polymeric materials selected among, e.g., polyethylene, polyamidic resins and PTFE suitably modified and/or filled.

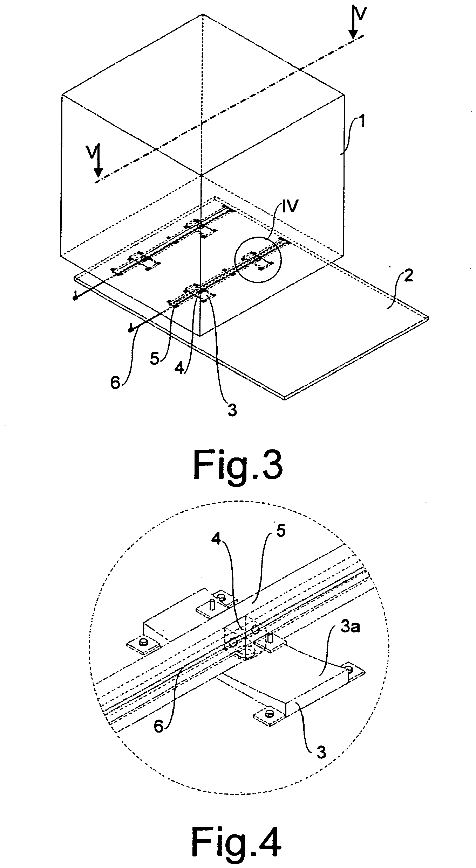

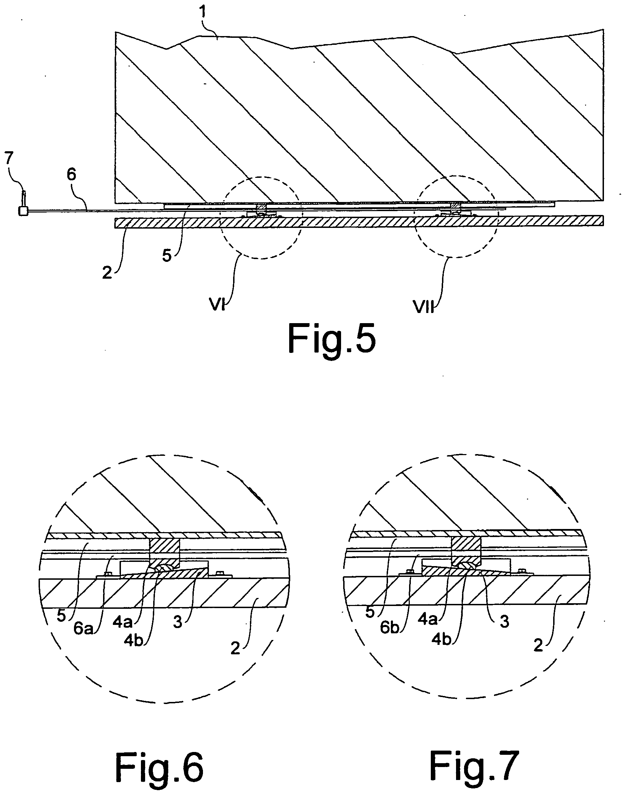

Referring to figures 3-7, a second embodiment of the damper according to the invention is now described, wherein in order to allow the tuning of the damper with respect to a structure 2, the sliding surfaces 3a of bearings 3 have radiuses of curvature transversally varying with respect to the direction of motion of mass 1, and the damper comprises driving means 6 suitable for modifying the contact points between mass 1 and the sliding surfaces 3a. By modifying the contact points between the sliding surface 3a and mass 1, the latter will move following a path having a different radius, thus allowing to vary the fundamental period and thereby to tune the damper according to the actual fundamental period of structure 2. Preferably, the driving means 6 do not act directly on mass 1, which is very cumbersome and difficult to move, but on its feet 4 by modifying their relative distance.

The bearings 3 are arranged in pairs on structure 2 with the respective sliding surfaces 3a parallel to each other and having a curvature radius increasing outwards when starting from the plane of symmetry of the damper in which mass 1 moves. The feet 4 are correspondingly assembled in pairs and movably on guides 5 fixed to mass 1 and transversally arranged with respect to its direction of motion, and are connected to each other through the driving means 6.

The driving means 6 comprise a worm provided at one end with a maneuvering member 7, e.g. a lever, suitable to allow the rotation thereof around its axis. The worm 6 comprises a first threaded portion 6a, inserted in a threaded hole formed in the upper portion 4a of a first foot 4 of the pair, and a second portion 6b with opposite threading inserted in a threaded hole formed in the upper portion 4a of a second foot 4 of the pair. By rotating lever 7 clockwise or counterclockwise, the rotation of the worm causes feet 4 to come close to each other or to move away along guide 5, thus varying their relative distance. In this way, feet 4 move to portions of the sliding surfaces 3a having a different radius, thus resulting in a variation of the fundamental period of the damper.

The curvature of the concave cylindrical surfaces 3a of bearings 3 may vary continuously or discretely, with more or less marked changes in curvature between one portion of the sliding surface 3a and another in order to obtain a larger or smaller tuning range with the same size of the sliding surface 3a.

The tuned mass damper according to the present invention may have more degrees of freedom, thus being able to be employed also when more directions of motion are foreseen, e.g. two mutually perpendicular directions.

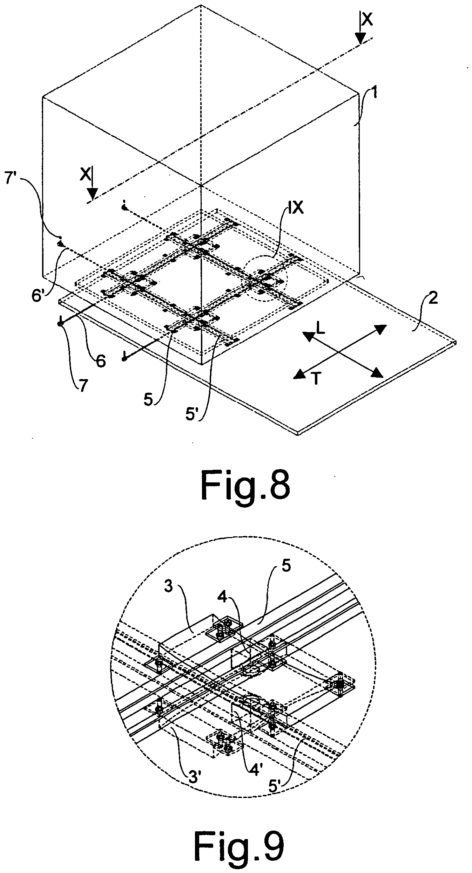

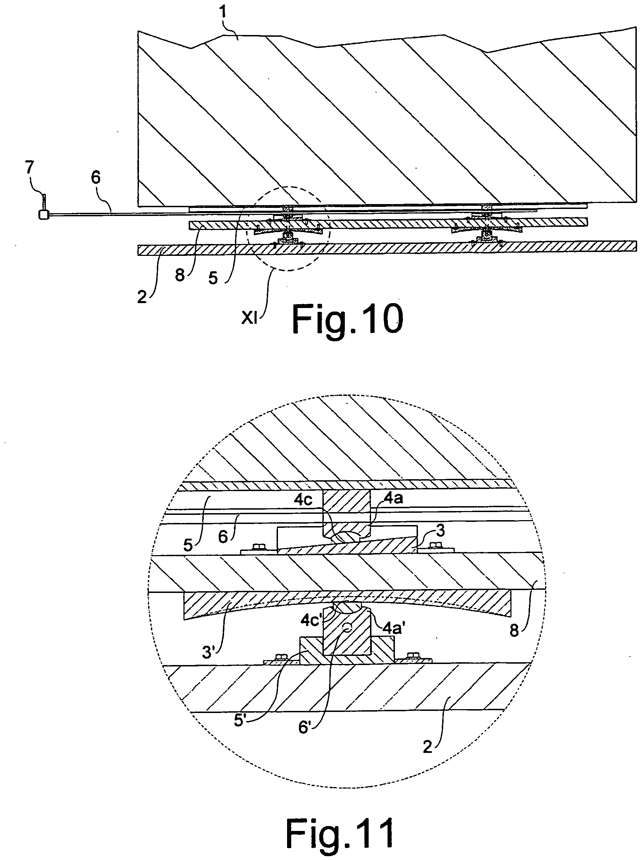

Figures 8-11 show a third embodiment of the damper according to the present invention, wherein mass 1 is supported by a first series of feet 4 contacting a first series of bearings 3. The first series of bearings 3 is restrained to a base 8 and the sliding surfaces of bearings 3 are so oriented as to define a first direction of motion marked by an arrow L. On the side of base 8 opposite the first series of bearings 3, a second series of bearings 3' is provided, which contact a second series of feet 4' restrained to structure 2 through corresponding guides 5' along which they are adjustable through related driving means 6'. The sliding surfaces 3a' of the bearings 3' of the second series are so oriented as to define a second direction of motion, which is perpendicular to the first one and marked by an arrow T.

Therefore, in this case the damper is provided with two degrees of freedom in the two directions of motion defined by the two series of bearings 3, 3'.

Other directions of motion may be similarly provided by arranging the bearings in a multilayer structure wherein each layer comprises a base and one or more bearings as well as a series of feet arranged at positions corresponding to the positions of the bearings. For each layer the direction of motion is defined by the orientation of the sliding surfaces of the one or more bearings arranged thereon.

In the case of a multilayer structure, the total mass of the damper comprises not only mass 1 but also the masses of the distinct bases 8, which are selectively activated depending on the directions of motion simultaneously applied by an external force.

As in the above-described embodiment provided with one degree of freedom, in order to allow the tuning of the fundamental period of the damper, the sliding surfaces 3a, 3a' of bearings 3, 3' have curvature radiuses transversally varying with respect to the direction of motion defined by them and each layer comprises driving means 6, 6' suitable for modifying the contact points between feet 4, 4' and the sliding surfaces 3a, 3a'.

Moreover, it is possible to differentiate the damping characteristics in the various directions of motion by using in the various layers different controlled friction materials for the couplings between the concave cylindrical sliding surfaces 3a, 3a' of bearings 3, 3' and the convex cylindrical surfaces 4c, 4c' of feet 4, 4', thus obtaining many possibilities for optimizing the response of the damper.

It is clear that the above-described and illustrated embodiments of the tuned mass damper are only examples susceptible of numerous variations. In particular, it is possible to use other controlled friction materials well known to those skilled in the art for coating the sliding surfaces. In addition, for the sliding surfaces made of a metal material it is possible to use special materials like chrome-nickel steel in order to provide high characteristics of hardness and minimize the wear.

## Claims

1. A tuned mass damper comprising at least one mass (1) restrained to a structure (2) through supporting means (3) of said tuned mass damper suitable to allow a pendulum motion of said mass (1) when said structure (2) is subject to an external force, as well as damping means of said tuned mass damper suitable for absorbing a portion of the kinetic energy of the moving mass (1), **characterized in that** said supporting means (3) comprise at least one bearing (3) provided with a concave cylindrical sliding surface (3a).

2. A damper according to the previous claim, **characterized in that** said supporting means (3) comprise a plurality of bearings (3) having concave cylindrical sliding surfaces (3a) of equal curvature and arranged parallel to each other, and **in that** said mass (1) is provided with a plurality of feet (4) arranged at positions corresponding to the positions of the bearings (3).

3. A damper according to the previous claim, **characterized in that** each foot (4) consists of an upper portion (4a) restrained to the mass (1) and of a lower portion (4b) that has a convex cylindrical surface (4c) suitable to contact the concave cylindrical sliding surface (3a) of the respective bearing (3).

4. A damper according to the previous claim, **characterized in that** said upper portion (4a) and said lower portion (4b) of each foot (4) are movable with respect to each other and coupled by means of a cylindrical or spherical cap joint suitable to allow a relative rotation thereof.

5. A damper according to one of the previous claims, **characterized in that** the damping means are made as coatings of controlled friction materials of the concave cylindrical sliding surfaces (3a) of the bearings (3) and of the convex cylindrical surfaces (4c) of the lower portions (4b) of the feet (4).

6. A damper according to any of claims 1 to 4, **characterized in that** the bearings (3) and the lower portions (4b) of the feet (4) are entirely made of controlled friction materials.

7. A damper according to claim 5 or 6, **characterized in that** said controlled friction materials are stainless steel and polymeric materials selected among polyethylene, polyamidic resins and PTFE modified and/or filled.

8. A damper according to one of the previous claims, **characterized in that** the sliding surfaces (3a) of the bearings (3) have curvature radiuses transversally varying with respect to the direction of motion of the mass (1), the damper further comprising driving means (6) suitable for modifying the contact points between the mass (1) and the sliding surfaces (3a).

9. A damper according to the previous claim, **characterized in that** the bearings (3) are arranged in pairs on the structure (2), the respective sliding surfaces (3a) being parallel to each other and having a curvature radius increasing outwards when starting from the plane of symmetry of the damper in which the mass (1) moves, the feet (4) being correspondingly mounted in pairs and movably on guides (5) fixed to the mass (1) and arranged transversally to its motion direction, said driving means (6) being connected to each pair of feet (4) and suitable for modifying their relative distance.

10. A damper according to the previous claim, **characterized in that** said driving means (6) comprise a worm (6) provided at one end with a maneuvering member (7) suitable to allow the rotation thereof around its axis, said worm (6) having a first threaded portion (6a) inserted in a threaded hole formed in the upper portion (4a) of a first foot (4) of the pair and a second portion (6b) with opposite threading inserted in a threaded hole formed in the upper portion (4a) of a second foot (4) of the pair.

11. A damper according to one of the previous claims, **characterized in that** the bearings are arranged in a multilayer structure, each layer comprising at least a base (8) and one or more bearings (3, 3') as well as a series of feet (4, 4') at positions corresponding to the positions of the bearings (3, 3'), the direction of motion for each layer being defined by the orientation of the sliding surfaces (3a, 3a') of the one or more bearings (3, 3') arranged thereon.

12. A damper according to the previous claim, **characterized in that** for each layer of said multilayer structure the sliding surfaces (3a, 3a') of the bearings have curvature radiuses transversally varying with respect to the direction of motion defined by them, each layer further comprising driving means (6, 6') suitable for modifying the contact points between the feet (4, 4') and the sliding surfaces (3a, 3a').

13. A damper according to claim 11 or 12, **characterized in that** in the various layers of said multilayer structure the couplings between the concave cylindrical sliding surfaces (3a, 3a') of the bearings (3, 3') and the convex cylindrical surfaces (4c, 4c') of the feet (4, 4') are made with different controlled friction materials.

14. A damper according to one of the previous claims, **characterized in that** the mass (1) is equal to 2-4% of the total mass of the structure (2).

## Patentansprüche

1. Schwingungstilger, umfassend mindestens eine Masse (1), die an einer Struktur (2) über Haltemittel (3) des Schwingungstilgers gehalten ist, die dafür geeignet sind, eine Pendelbewegung der Masse (1) zu ermöglichen, wenn die Struktur (2) eine äußere Kraft erfährt, sowie Dämpfungsmittel des Schwingungstilgers, die dafür geeignet sind, einen Teil der kinetischen Energie der sich bewegenden Masse (1) zu absorbieren, **dadurch gekennzeichnet, dass** die Haltemittel (3) mindestens ein Lager (3) umfassen, das mit einer konkaven zylindrischen Gleitfläche (3a) versehen ist.

2. Schwingungstilger nach dem vorhergehenden Anspruch, **dadurch gekennzeichnet, dass** die Haltemittel (3) eine Vielzahl von Lagern (3) mit konkaven zylindrischen Gleitflächen (3a) mit gleicher Krümmung und parallel zueinander angeordnet umfassen, und dadurch, dass die Masse (1) mit einer Vielzahl von Füßen (4) versehen ist, die an Positionen angeordnet sind, die den Positionen der Lager (3) entsprechen.

3. Schwingungstilger nach dem vorhergehenden Anspruch, **dadurch gekennzeichnet, dass** jeder Fuß (4) aus einem oberen Abschnitt (4a), der an der Masse (1) gehalten ist, und aus einem unteren Abschnitt (4b) besteht, der eine konvexe zylindrische Fläche (4c) aufweist, die dafür geeignet ist, die konkave zylindrische Gleitfläche (3a) des jeweiligen Lagers (3) zu berühren.

4. Schwingungstilger nach dem vorhergehenden Anspruch, **dadurch gekennzeichnet, dass** der obere Abschnitt (4a) und der untere Abschnitt (4b) jedes Fußes (4) zueinander beweglich sind und mittels einer zylindrischen oder kugelförmigen Gelenkverbindung, die dafür geeignet ist, eine relative Drehung davon zu ermöglichen, gekoppelt sind.

5. Schwingungstilger nach einem der vorhergehenden Ansprüche, **dadurch gekennzeichnet, dass** die Dämpfungsmittel als Beschichtungen der konkaven zylindrischen Gleitflächen (3a) der Lager (3) und der konvexen zylindrischen Flächen (4c) der unteren Abschnitte (4b) der Füße (4) aus Materialien mit kontrollierter Reibung ausgeführt sind.

6. Schwingungstilger nach einem der Ansprüche 1 bis 4, **dadurch gekennzeichnet, dass** die Lager (3) und die unteren Abschnitte (4b) der Füße (4) vollständig aus Materialien mit kontrollierter Reibung hergestellt sind.

7. Schwingungstilger nach Anspruch 5 oder 6, **dadurch gekennzeichnet, dass** die Materialien mit kontrollierter Reibung rostfreier Stahl und Polymerwerkstoffe sind, die aus Polyethylen, Polyamidharzen und PTFE, modifiziert und/oder gefüllt, ausgewählt sind.

8. Schwingungstilger nach einem der vorhergehenden Ansprüche, **dadurch gekennzeichnet, dass** die Gleitflächen (3a) der Lager (3) Krümmungsradien aufweisen, die sich quer zur Bewegungsrichtung der Masse (1) ändern, wobei der Schwingungstilger ferner Antriebsmittel (6) umfasst, die dafür geeignet sind, die Berührungspunkte zwischen der Masse (1) und den Gleitflächen (3a) zu verändern.

9. Schwingungstilger nach dem vorhergehenden Anspruch, **dadurch gekennzeichnet, dass** die Lager (3) paarweise an der Struktur (2) angeordnet sind, wobei die jeweiligen Gleitflächen (3a) parallel zueinander verlaufen und einen Krümmungsradius aufweisen, der nach außen größer wird, wenn von der Symmetrieebene des Schwingungstilgers, in der sich die Masse (1) bewegt, ausgegangen wird, wobei die Füße (4) entsprechend paarweise montiert sind und auf Führungen (5), die an der Masse (1) befestigt sind und quer zu ihrer Bewegungsrichtung angeordnet sind, bewegt werden können, wobei die Antriebsmittel (6) mit jedem Paar Füße (4) verbunden sind und zur Änderung ihres relativen Abstands geeignet sind.

10. Schwingungstilger nach dem vorhergehenden Anspruch, **dadurch gekennzeichnet, dass** die Antriebsmittel (6) ein Gewinde (6) umfassen, das an einem Ende mit einem Steuerelement (7) versehen ist, das dafür geeignet ist, die Drehung um seine Achse zu ermöglichen, wobei das Gewinde (6) einen ersten Gewindeabschnitt (6a) aufweist, der in einer Gewindebohrung steckt, die im oberen Abschnitt (4a) eines ersten Fußes (4) des Paars gebildet ist, und einen zweiten Abschnitt (6b) mit entgegengesetztem Gewinde, der in einer Gewindebohrung steckt, die im oberen Abschnitt (4a) eines zweiten Fußes (4) des Paars gebildet ist.

11. Schwingungstilger nach einem der vorhergehenden Ansprüche, **dadurch gekennzeichnet, dass** die Lager als mehrschichtige Struktur angeordnet sind, wobei jede Schicht mindestens einen Träger (8) und ein oder mehrere Lager (3, 3') sowie eine Reihe von Füßen (4, 4') an Positionen umfasst, die den Positionen der Lager (3, 3') entsprechen, wobei die Bewegungsrichtung für jede Schicht durch die Ausrichtung der Gleitflächen (3a, 3a') des einen oder der mehreren Lager (3, 3') definiert ist, die darauf angeordnet sind.

12. Schwingungstilger nach dem vorhergehenden Anspruch, **dadurch gekennzeichnet, dass** bei jeder Schicht der mehrschichtigen Struktur die Gleitflächen (3a, 3a') der Lager Krümmungsradien aufweisen, die sich quer zur Bewegungsrichtung, die durch sie definiert ist, ändern, wobei jede Schicht ferner Antriebsmittel (6, 6') umfasst, die dafür geeignet sind, die Berührungspunkte zwischen den Füßen (4, 4') und den Gleitflächen (3a, 3a') zu verändern.

13. Schwingungstilger nach Anspruch 11 oder 12, **dadurch gekennzeichnet, dass** in den verschiedenen Schichten der mehrschichtigen Struktur die Kopplungen zwischen den konkaven zylindrischen Gleitflächen (3a, 3a') der Lager (3, 3') und den konvexen zylindrischen Flächen (4c, 4c') der Füße (4, 4') mit verschiedenen Materialien mit kontrollierter Reibung ausgeführt sind.

14. Schwingungstilger nach einem der vorhergehenden Ansprüche, **dadurch gekennzeichnet, dass** die Masse (1) 2 bis 4% der Gesamtmasse der Struktur (2) entspricht.

## Revendications

1. Amortisseur de masse accordé comprenant au moins une masse (1) retenue sur une structure (2) par des moyens de support (3) de l'amortisseur de masse accordé adaptés pour permettre un mouvement de pendule de la masse (1) lorsque la structure (2) est soumise à une force externe, ainsi que des moyens d'amortissement de l'amortisseur de masse accordé adaptés pour absorber une partie de l'énergie cinétique de la masse mobile (1), **caractérisé en ce que** les moyens de support (3) comprennent au moins un palier (3) muni d'une surface de glissement cylindrique concave (3a).

2. Amortisseur selon la revendication précédente, **caractérisé en ce que** les moyens de support (3) comprennent plusieurs paliers (3) ayant des surfaces de glissement cylindriques concaves (3a) de courbure égale et agencées parallèlement les unes aux autres, et **en ce que** la masse (1) est munie de plusieurs pieds (4) agencés dans des positions correspondant aux positions des paliers (3).

3. Amortisseur selon la revendication précédente, **caractérisé en ce que** chaque pied (4) est constitué d'une partie supérieure (4a) retenu sur la masse (1) et d'une partie inférieure (4b) qui a une surface cylindrique convexe (4c) adaptée pour venir en contact avec la surface de glissement cylindrique concave (3a) du palier respectif (3).

4. Amortisseur selon la revendication précédente, **caractérisé en ce que** la partie supérieure (4a) et la partie inférieure (4b) de chaque pied (4) sont mobiles l'une par rapport à l'autre et reliées par l'intermédiaire d'un joint de garniture cylindrique ou sphérique adapté pour permettre une rotation relative de celles-ci.

5. Amortisseur selon l'une quelconque des revendications précédentes, **caractérisé en ce que** les moyens d'amortissement sont constitués de revêtements de matériaux à frottement commandé des surfaces de glissement cylindriques concaves (3a) des paliers (3) et des surfaces cylindriques convexes (4c) des parties inférieures (4b) des pieds (4).

6. Amortisseur selon l'une quelconque des revendications 1 à 4, **caractérisé en ce que** les paliers (3) et les parties inférieures (4b) des pieds (4) sont entièrement constitués de matériaux à frottement commandé.

7. Amortisseur selon les revendications 5 ou 6, **caractérisé en ce que** les matériaux à frottement commandé sont de l'acier inoxydable et des matériaux polymériques sélectionnés parmi le polyéthylène, des résines polyamides et du PTFE modifié et/ou chargé.

8. Amortisseur selon l'une quelconque des revendications précédentes, **caractérisé en ce que** les surfaces de glissement (3a) des paliers (3) ont des rayons de courbure variables transversalement par rapport à la direction de déplacement de la masse (1), l'amortisseur comprenant de plus des moyens d'entraînement (6) adaptés pour modifier les points de contact entre la masse (1) et les surfaces de glissement (3a).

9. Amortisseur selon les revendications précédentes, **caractérisé en ce que** les paliers (3) sont agencés par paires sur la structure (2), les surfaces de glissement respectives (3a) étant parallèles les unes aux autres et ayant un rayon de courbure croissant vers l'extérieur lorsqu'on démarre du plan de symétrie de l'amortisseur dans lequel la masse (1) se déplace, les pieds (4) étant montés de manière correspondante par paires et mobiles sur des guides (5) fixés sur la masse (1) et agencés transversalement par rapport à sa direction de déplacement, les moyens d'entraînement (6) étant reliés à chaque paire de pieds (4) et adaptés pour modifier leur distance relative

10. Amortisseur selon la revendication précédente, **caractérisé en ce que** les moyens d'entraînement (6) comprennent une vis (6) munie à une extrémité d'un élément de manoeuvre (7) adapté pour permettre la mise en rotation de celle-ci autour de son axe, la vis (6) ayant une première partie filetée (6a) insérée dans un trou taraudé formé dans la partie supérieure (4a) d'un premier pied (4) de la paire et une seconde partie (6b) ayant un filetage opposé insérée dans un trou taraudé formé dans la partie supérieure (4a) d'un second pied (4) de la paire.

11. Amortisseur selon l'une quelconque des revendications précédentes, **caractérisé en ce que** les paliers sont agencés dans une structure à multiples couches, chaque couche comprenant au moins une base (8) et un ou plusieurs paliers (3, 3'), ainsi qu'une série de pieds (4, 4') dans des positions correspondant aux positions des paliers (3, 3'), la direction de déplacement de chaque couche étant définie par l'orientation des surfaces de glissement (3a, 3a') des un ou plusieurs paliers (3, 3') agencés sur celle-ci.

12. Amortisseur selon la revendication précédente, **caractérisé en ce que** pour chaque couche de la structure à multiples couches les surfaces de glissement (3a, 3a') des paliers ont des rayons de courbure variables transversalement par rapport à la direction de déplacement définie par celles-ci, chaque couche comprenant de plus des moyens d'entraînement (6, 6') adaptés pour modifier les points de contact entre les pieds (4, 4') et les surfaces de glissement (3a, 3a').

13. Amortisseur selon les revendications 11 ou 12, **caractérisé en ce que** dans les diverses couches de la structure à multiples couches les accouplements entre les surfaces de glissement cylindriques (3a, 3a') des paliers (3 ,3') et les surfaces cylindriques convexes (4c, 4c') des pieds (4, 4') sont constitués de matériaux à frottement commandé différents.

14. Amortisseur selon l'une quelconque des revendications précédentes, **caractérisé en ce que** la masse (1) est de 2 à 4 % de la masse totale de la structure (2).
